# EUROPEAN PATENT SPECIFICATION

(11) **EP 3 782 774 B1**
(45) Date of publication and mention of the grant of the patent: **08.11.2023**
(21) Application number: 19781053.4
(22) Date of filing: 05.04.2019
(51) Int. Cl.: G05D 1/02, A01D 34/00

(54) **MOBILE ROBOT**
MOBILER ROBOTER
ROBOT MOBILE

(30) Priority: 06.04.2018 US 201862653567 P
(43) Date of publication of application: 24.02.2021
(73) Proprietor: LG Electronics Inc., Yeongdeungpo-gu Seoul 07336 (KR)
(72) Inventor: LEE, Jaehoon, Seoul 08592 (KR); CHOI, Kyuchun, Seoul 08592 (KR); WOO, Jongjin, Seoul 08592 (KR); KIM, Dongseong, Seoul 08592 (KR); KIM, Hyungsub, Seoul 08592 (KR); SHIN, Seungin, Seoul 08592 (KR); YU, Kyungman, Seoul 08592 (KR); JEONG, Jaehoon, Seoul 08592 (KR); NAM, Dongkyun, Seoul 08592 (KR)
(74) Representative: Ter Meer Steinmeister & Partner
(86) International application number: PCT/KR2019/004051
(87) International publication number: WO 2019/194628

(56) References cited:
- KR-A- 20100 118 454
- KR-A- 20110 090 702
- KR-A- 20160 128 123
- KR-B1- 100 963 783
- KR-B1- 101 513 050
- US-A1- 2006 149 465
- US-A1- 2014 025 201
- US-A1- 2016 282 868
- US-A1- 2016 282 869

## Description

### BACKGROUND OF THE DISCLOSURE

### Field of the disclosure

The present disclosure relates to a moving robot and a control method of a moving robot, and relates to a moving robot which autonomously travels in a designated area and a control method of the moving robot.

### Related Art

In general, a robot is a device that automatically performs a predetermined operation while traveling a predetermined zone without a manipulation of a user. The robot detects an obstacle installed in the zone and approaches or avoids the obstacle to perform a designated operation.

As a lawn mower, there are a riding-type mower on which a user rides and which cuts lawn or grass on the ground while being moved by an operation of the user and a walk-behind-type mower or a hand-type mower in which a user mows lawn while manually dragging or pushing the mower.

The lawn mower is moved by a direct manipulation of a user so as to mow the lawn, and thus, there is an inconvenience that the user should directly operate the device.

Accordingly, a robot-type lawn mower having a means for mowing lawn using a robot has been developed.

The robot-type lawn mower is operated outdoors, and thus, there is a need to set a moving area in advance. In the case of outdoors, an area is an open space. Accordingly, the area should be designated, and the area should be limited to travel a place where the lawn is planted.

To this end, in Korean Patent No. 10-1513050, a wire is embedded in a place where lawn is planted in order to set an area where a lawn mower robot is to be moved, and a moving robot is controlled to move in an inner area of the wire. The traveling of the robot is controlled by obtaining coordinate information of a boundary wire.

However, even when the robot travels using the coordinate information, a problem such as slipping may occur as the moving robot travels in an outdoor environment, and there is a limit in determining an actual position due to an obstacle such as a small stone which cannot avoid.

Accordingly, when the moving robot tries to move a specific point, the robot moves along an outer boundary line together with robots so that the robot can surely reach a target point.

United State Patent Publication No. 20170344012 discloses a robot working tool system for working within a work area divided into at least one section by setting a physical or virtual boundary. The robot linearly travels within a section, changes a trajectory of the robot when the robot reaches a boundary of the section, and travels along the boundary when moving from one section to the next section.

In addition, in United State Patent Publication No. 20180064024, an area is divided so that the robot moves in the divided area according to a movement pattern. The robot moves along a reference line of a boundary line, and when the robot moves from one point in the area to another point, the robot moves a point of a wire close to a current position and moves along a boundary line by the wire.

However, when the robot travels along the boundary line, there is a problem that a movement time is lengthened according to a shape of the boundary line on the outside.

In addition, there is a possibility that a wheel groove may be formed on the ground in a process of repeatedly moving a specific area. When a groove is formed on the ground, the robot cannot get out of the groove during traveling, water may accumulate in the groove, and thus, the groove may be an obstacle which impedes normal traveling during the next traveling.

Accordingly, there is a need for a way to quickly reach a target point while moving more efficiently within a boundary line.

US 2016/282868 A1 presents an apparatus for controlling operation of an autonomously navigating utility vehicle equipped with a prime mover to travel about a working area delineated by a boundary wire laid thereat and divided into a first area and a second area connected by a third area that is narrower than the first and second areas, there are provided with a first travel controlling unit that controls operation of the prime mover to make the vehicle travel along the boundary wire based on a detected magnetic field, a third area identifying unit that identifies a location of the third area in the working area based on a detected position of the vehicle when the vehicle is controlled to travel by the first travel controlling unit, and a second travel controlling unit that controls operation of the prime mover to make the vehicle travel forward toward an entrance of the third area whose location is identified by the third area identifying unit based on the position of the vehicle detected from the output of the position sensor.

US 2016/282869 A1 presents an apparatus for controlling operation of an autonomously navigating utility vehicle equipped with a prime mover to travel about a working area delineated by a boundary wire in order to perform work autonomously, there are provided with an objective location identifying unit that identifies a location of an objective in the working area, a route generating unit that generates a target return route for the vehicle to return to the obj ective, and a travel controlling unit that controls operation of the prime mover to make the vehicle travel along the target return route. The route generating unit selects, among a first set of radial lines imaginarily drawn on the working area to radiate from the position of the vehicle and a second set of radial lines imaginarily drawn on the working area to radiate from the objective, a first radial line and a second radial line that result in shortest distance from the position of the vehicle to the objective and generates the target return route by the first radial line and the second radial line.

US 2014/025201 A1 provides a method for planning a path for an autonomous walking humanoid robot that takes an autonomous walking step using environment map information, the method comprising: an initialization step of initializing path input information of the autonomous walking humanoid robot using origin information, destination information, and the environment map information; an input information conversion step of forming a virtual robot including information on the virtual robot obtained by considering the radius and the radius of gyration of the autonomous walking humanoid robot based on the initialized path input information; a path generation step of generating a path of the virtual robot using the virtual robot information, the origin information S, the destination information G, and the environment map information; and an output information conversion step of converting the path of the autonomous walking humanoid robot based on the virtual robot path generated in the path generation step.

US 2006/149465 A1 presents a method of moving in a minimum cost path using a grid map, and an apparatus to perform the method, the method including calculating a move cost to a goal, from each of a plurality of cells comprises in a space in which a mobile home appliance moves, and planning a movement path to the goal according to the move cost; determining one or more via points at which a direction changes on the movement path; planning the minimum cost path from the movement path by selecting one or more shortest-distance via points from the via points; and moving from a first shortest-distance via point to a second shortest-distance via point.

### SUMMARY

An object of the present disclosure is to provide a moving robot which moves to a target point by setting at least one transit point in a movement path along which the moving robot starts from a current point to move a target point based on a map.

Technical problems of the present disclosure are not limited to the technical problems mentioned above, and other technical problems which are not mentioned will be clearly understood by a person skilled in the art from the following descriptions.

One or more objects of the present technique are achieved by the invention set out by the features of the independent claim(s).

A moving robot according to an embodiment of the present disclosure sets a movement path along which the moving robot moves from a starting point to a target point based on a map in an area divided by a boundary line, sets at least one transit point between the starting point and the target point, and moves to the target point along a movement path passing through the transit point.

The moving robot of the present disclosure sets at least one transit point when the moving robot cannot linearly travel to a target point of the moving robot and sets a movement path which connects the transit points to each other.

The moving robot of the present disclosure sets at least one feature point based on the boundary line in the area divided by the boundary line and sets the transit point at a position adjacent to the feature point.

The moving robot of the present disclosure sets a plurality of transit candidates at a position adjacent to the feature point and sets any one of the plurality of transit candidates to the transit point.

When the moving robot of the present disclosure cannot travel while moving to the target point along the movement path, the moving robot sets a new transit point to correct the movement path.

According to an aspect of the present disclosure, there is provided a moving robot including: a main body which travels an area formed by a boundary line; a traveler which moves the main body; an obstacle detector which detects an obstacle; and a controller which controls the traveler so that the main body avoids the detected obstacle and is prevented from invading the boundary line and deviating outside the area, sets at least transit point between a target point and a starting point to avoid the boundary line or the obstacle when the main body moves, and sets a movement path which linearly connects the starting point, the transit point, and the target point to each other.

According to another aspect of the present disclosure, there is provided a control method of a moving robot, including: checking a position of a target point to be moved in an area formed by a boundary line; setting at least one transit point between a starting point and the target point to avoid the boundary line and an obstacle; setting a movement path which linearly connects the starting point, the transit point, and the target point to each other; and moving the moving robot to the target point along the movement path.

### ADVANTAGEOUS EFFECTS

According to the moving robot and the control method of a moving robot of the present disclosure, the transit point to which the moving robot is to be moved is set based on the feature point extracted based on the map, the movement path which connects the transit points is set, and thus, the moving robot can easily move in the boundary line.

According to the present disclosure, the transit point is designated to set the movement path, and thus, a movement distance can be shortened.

According to the present disclosure, the moving robot can correctly move to the target point at a short time through the movement path including the transit point.

According to the present disclosure, the transit point is designated according to the shape of the boundary line or the position of the obstacle, and thus, it is possible to easily set the movement path.

According to the present disclosure, it is possible to easily change the movement path even when an unexpected situation occurs.

According to the present disclosure, the plurality of transit candidates are set based on the feature point set with reference to the boundary line, one of the transit candidates is designated as a transit point, and thus, it is possible to easily correct the movement path.

According to the present disclosure, even when a position error occurs during movement, it is possible to correct the position using the boundary line or the feature point.

According to the present disclosure, even when the target point is positioned outside the boundary line, the transit point is set at a position adjacent to the target point so that the moving robot can move thereto.

According to the present disclosure, the moving robot can move to the target point regardless of the boundary line.

According to the present disclosure, the moving robot can easily move to even a point spaced from the boundary line by a predetermined distance.

According to the present disclosure, even after the moving robot arrives at the target point, at least one transit point is set between a new target point and the moving robot. Therefore, a new movement path is set, and the moving robot can travel along the new movement path.

According to the present disclosure, the moving robot moves to the area formed by the boundary line. Moreover, the moving robot sets a new movement path according to the target point and does not repeatedly move to a specific position, and thus, it is possible to prevent a groove from being formed on the ground.

### BRIEF DESCRIPTION OF THE DRAWINGS

FIG. 1 is a perspective view illustrating a moving robot according to an embodiment of the present disclosure.
FIG. 2 is a block diagram illustrating main portions of the moving robot according to the embodiment of the present disclosure.
FIG. 3 is an exemplary diagram explaining a traveling area and a boundary line of the moving robot according to the embodiment of the present disclosure.
FIG. 4 is a diagram explaining a movement path using a transit point of the moving robot according to the embodiment of the present disclosure.
FIG. 5 is a diagram illustrating a transit candidate for designating the transit point of FIG. 4.
FIG. 6 is a diagram explaining a change of the movement path of the moving robot according to the embodiment of the present disclosure.
FIGS. 7 and 8 are diagrams explain movement path setting according to a target point of the moving robot according to the embodiment of the present disclosure.
FIG. 9 is a flowchart of a control method of a moving robot which moves using the transit point according to an embodiment of the present disclosure.
FIG. 10 is a flowchart illustrating a movement path setting method of the moving robot according to the embodiment of the present disclosure.
FIG. 11 is a flowchart illustrating a movement path change method of the moving robot according to the embodiment of the present disclosure.

### DESCRIPTION OF EXEMPLARY EMBODIMENTS

Hereinafter, advantages and features of the present disclosure, and a method of achieving them will be apparent with reference to embodiments described below in detail with the accompanying drawings. However, the present disclosure is not limited to the embodiments disclosed below, but may be implemented in a variety of different forms. The embodiments are provided only to ensure that the disclosure of the present disclosure is complete, and to completely inform the scope of the invention to those with ordinary skill in the technical field to which the present disclosure belongs, and the present disclosure is defined by the scope of the claim. The same reference numerals refer to the same components throughout the specification. A control configuration of the present disclosure may include at least one processor.

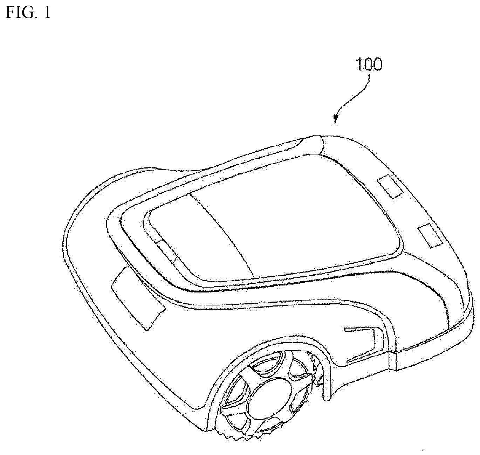

FIG. 1 is a perspective view illustrating a moving robot according to an embodiment of the present disclosure.

As illustrated in FIG. 1, the moving robot 100 according to the present disclosure has a casing which forms an exterior of a main body and forms a space in which parts are stored therein, an obstacle detection unit (not illustrated) which is disposed in the front of the main body to detect an obstacle, and moving wheels (right and left wheels) configured to move and rotate the moving robot. In addition, the moving robot 100 includes an auxiliary wheel (not illustrated) may be further provided in a lower end portion of the main body, and a battery (not illustrated) which provides power required for traveling.

In a case where the moving robot 100 is a cleaning robot, the moving robot 100 includes a suction unit which sucks dust from a floor surface, and in a case where the moving robot 100 is a lawn mower robot, a cutting unit (not illustrated) is formed in a lower end of a front portion or a bottom surface of the main body to mow lawn or weeds to a certain size from a floor surface.

Hereinafter, the moving robot of the present disclosure is described as an example of a lawn mower robot, but can be applied to a cleaning robot in relation to movement within an area using a map described below, setting of a transit point, and setting and modification of a movement path, and the moving robot of the present disclosure can be applied to any other autonomous moving robot.

The moving robot 100 travels in an area formed by a boundary line. The moving robot 100 detects the boundary line and can travel along the boundary line.

The moving robot 100 sets any one side of the area formed by the boundary line as the area. The moving robot sets an inner area of the boundary line as a traveling area.

The moving robot travels within a set area while preventing from going out of a boundary. The moving robot 100 does not cross the boundary line or travel through the boundary line even when the boundary line is not positioned at a physical obstacle such as a wall or a fence.

The moving robot 100 detects the boundary line while traveling, detects an obstacle located in a traveling direction, and travels to avoid the obstacle. The moving robot 100 can move while mowing the lawn on the ground within the area.

The moving robot 100 may generate a map for the area based on information on the detected boundary line and obstacle. While the moving robot 100 travels the set area, the moving robot 100 may divide the area into a travelable area and a non-travelable area and store the areas in the map.

The moving robot 100 may determine a location by calculating coordinates for the obstacle and the boundary line on a map. The moving robot 100 may calculate a position of a charging station, store the position in a map, and determine the position.

The moving robot 100 may extract the feature point based on the position of the boundary line or the obstacle, set at least one transit point based on the feature point, and set a movement path connecting the transit points to each other.

The moving robot designates a position so as not to invade the boundary line for some areas which move a point where the moving robot cannot linearly move, and thus, the moving robot can set all points where the linear movement is obstructed as feature points.

The moving robot 100 may set a movement path including at least one transit point from a starting point to a target point.

The feature point is a point of a protruding area, and may be set at a breakpoint of the boundary line, for example, an edge, a position of the obstacle, or a corner of a boundary formed by the obstacle. The feature point may be formed not only in a convex edge but also in a convex edge.

The transit point may be set to any one of a plurality of transit candidates set at a predetermined distance from the feature point, including the feature point. The feature point can also be set as a transit point.

In response to a state of the battery, the moving robot 100 stops an operation being performed and returns to a charging station (not illustrated) for charging. The charging station transmits a guide signal for return of the moving robot, and the moving robot receives the guide signal to return to the charging station.

The moving robot 100 may communicate with a terminal (not illustrated) to share a map, and may be operated according to a control command of the terminal. The moving robot 100 may transmit data on a current state to the terminal so that a message indicating that charging is in progress is output through the terminal.

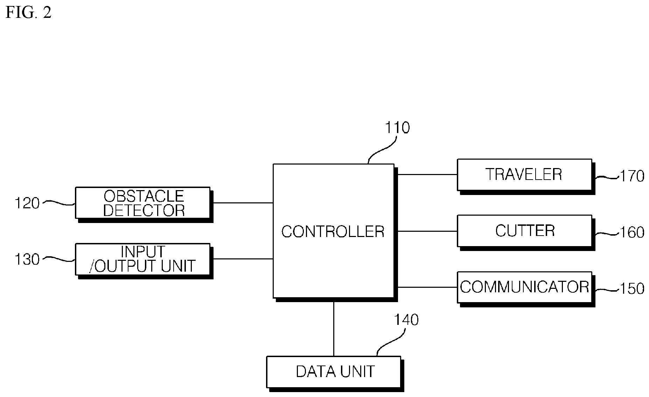

FIG. 2 is a block diagram illustrating main portions of the moving robot according to the embodiment of the present disclosure.

As illustrated in Figure 2, the moving robot 100 includes an obstacle detector 120, an input/output unit 130, a traveler 170, a cutter 160, a communicator 150, a data unit 140, and a controller 110 which controls all operations.

The input/output unit 130 includes input means such as at least one button, switch, and touch pad, and output means such as a display and a speaker, and thus, receives a user command and outputs an operation state of the moving robot. The input/output unit 130 may output a warning when an abnormality occurs in the moving robot when a traveling impossibility situation or an isolated situation occurs.

In the data unit 140, an input detection signal is stored, reference data for determining the obstacle is stored, and obstacle information on the detected obstacle is stored. In addition, the data unit 140 stores control data for controlling the operation of the moving robot and data according to an operation mode of the moving robot.

The collected position information is stored in the data unit 140, and information and a map on the boundary line and the traveling area are stored.

In addition, the data unit 140 stores data which can be read by a microprocessor, and includes a hard disk drive (HDD), a solid state disk (SSD), a silicon disk drive (SDD), a ROM, a RAM, a CD-ROM, a magnetic tape, a floppy disk, and an optical data storage device.

The communication unit 150 may communicate with a terminal positioned within a predetermined distance through wired or wireless communication. In addition, the communication unit 150 may be connected to a predetermined network to communicate with an external server or a terminal controlling the moving robot.

The communication unit 270 transmits the generated map to the terminal, receives a command from the terminal, and transmits data on an operation state of the moving robot to the terminal. The communication unit 270 transmits and receives data including short-range wireless communication such as ZigBee and Bluetooth, as well as communication modules such as Wi-Fi and WiBro.

The traveler 170 includes at least one driving motor so that the moving robot travels according to a control command from the controller 110. The traveler 170 may include a left wheel driving motor which rotates the left wheel and a right wheel driving motor which rotates the right wheel, and may also include an auxiliary wheel. When the main body travels straight, the left wheel driving motor and the right wheel driving motor rotate in the same direction. However, when the left wheel driving motor and the right wheel driving motor rotate at different speeds or in directions opposite to each other, the traveling direction of the main body 10 can be switched. At least one auxiliary wheel (not illustrated) for stably supporting the main body 10 may be further provided.

The cutting unit 160 mows the lawn on the ground surface while traveling. The cutter 160 includes a brush or blade for mowing the lawn, and thus, when the brush or blade is rotated, the lawn on the ground is mowed.

The obstacle detector 120 includes a plurality of sensors to detect an obstacle located in the traveling direction. Further, the obstacle detector 120 may detect an obstacle in the front of the main body, that is, in the traveling direction, using at least one of laser, ultrasonic, infrared, and 3D sensors. In addition, the obstacle detector may further include a cliff detection sensor which is installed on a rear surface of the main body to detect a cliff.

The obstacle detector 120 may include a camera which photographs a front side to detect the obstacle. The camera is a digital camera and may include an image sensor (not illustrated) and an image processor (not illustrated). The image sensor is a device which converts an optical image into an electrical signal, and includes a chip in which a plurality of photo diodes are integrated, and a pixel is exemplified as a photo diode. Charges are accumulated in each of the pixels by an image deposited on the chip by light passing through a lens, and charges accumulated in the pixels are converted into an electrical signal (for example, voltage). As the image sensor, a Charge Coupled Device (CCD), a Complementary Metal Oxide Semiconductor (CMOS), or the like is well known. In addition, the camera may include an image processor (DSP) which processes the captured image.

A position detector 180 includes a plurality of sensor modules for transmitting and receiving position information.

The position detector includes a GPS module which transmits and receives GPS signals, or a position sensor module which transmits and receives position information from a position information transmitter. When the position information transmitter transmits signals in any one of ultrasonic, Ultra Wide Band (UWB), and infrared rays, the sensor module for transmitting and receiving ultrasonic, UWB, and infrared signals is provided correspondingly.

A UWB radio technology does not use a RF carrier, and uses a very wide frequency band of several GHz or more in a Baseband. The UWB radio technology uses very narrow pulses of several nanoseconds or several picoseconds. Since the pulses emitted from the UWB sensor are several nanometers or several picos, penetrability is good, and thus, very short pulses emitted from other UWB sensors can be received even if an obstacle exist around them. In the UWB sensor, a transmitter and a receiver may be formed as one module.

As described above, since the signal of the UWB sensor can pass through the obstacle to transmit the signal, even if the user moves with the terminal, signal transmission is not affected. However, in the case of an obstacle larger than a predetermined size, the signal may not be transmitted, or even if the signal penetrates the obstacle, a transmission distance may be reduced.

The moving robot may include a plurality of UWB sensors. When two UWB sensors are provided, for example, the two UWB sensors are respectively provided on a right side and a left side of the main body to receive signals, and thus, it is possible to calculate an accurate position by comparing a plurality of received signals with each other. For example, when distances measured by the left sensor and the right sensor are different from each other according to a position of a reference position information transmitter or terminal, based on this, the moving robot uses the difference between the received signals to determine a relative position and the direction of the robot. When the position information transmitter includes the UWB sensor to transmit a signal, the terminal may receive a signal from the position information transmitter through the provided UWB signal.

In addition, the moving robot may include at least one inclination sensor (not illustrated) to detect a movement of the main body. The inclination sensor calculates an inclination direction and an inclination angle when the main body is inclined in front, rear, left, and right directions. A tilt sensor, an acceleration sensor, or the like may be used as the inclination sensor, and in a case of the acceleration sensor, any one of a gyro type sensor, an inertial type sensor, and a silicon semiconductor type sensor may be applied. In addition, various sensors or devices capable of detecting the movement of the main body may be used.

In addition, the moving robot may further include a floor state detection sensor which detects a floor state of a cleaning area, and may detect the floor state using a sensor of the obstacle detector or a camera.

The controller 110 controls input/output of data and controls the traveler so that the moving robot travels according to the setting. The controller 110 controls the traveler 170 to independently control operations of the left wheel driving motor and the right wheel driving motor so that the main body 10 moves straight or rotates.

The controller 110 controls the traveling by recognizing the detected boundary line and obstacle.

The controller 110 may set any one of the areas formed by the boundary line as a travelable area. In addition, the controller 110 connects discontinuous position information with lines or curves to set the boundary line in a closed loop form, and sets an inner area as a travelable area. In addition, when a plurality of boundary lines are set, the controller 110 may set any one of the areas formed by the boundary lines as a travelable area.

The controller 110 generates a map based on information obtained along the boundary line, position information, and information on an obstacle in an area detected during the traveling. The controller calculates coordinates from the map and determines the position by matching the area formed by the boundary line with the coordinates.

When the traveling area and the boundary thereof are set, the controller 110 controls the traveler so that the traveler travels within the area and does not deviate from the boundary line.

The controller 110 controls the traveling based on information on the boundary line and the obstacle detected during the traveling.

In addition, the controller 110 determines the obstacle information input by the obstacle detector 120 so that the moving robot travels to avoid the obstacle, and may correct a preset area in some cases. The controller 110 determines the position of the obstacle in response to the obstacle information, determines the type of the obstacle, and sets an avoidance direction, and may perform setting so that the moving robot does not to approach more than a predetermined distance when a cliff is detected.

The controller 110 controls the cutter and the traveler to mow the lawn while traveling the area according to the input control command.

The controller 110 may move to a specific location and start an operation in response to a control command. The controller calculates a current position, a starting point, and a target point based on the map and sets the movement path.

The controller 110 may calculate a plurality of feature points with reference to the boundary line and the obstacle based on the map and set the movement path based on the feature points. The controller 110 may set a breakpoint and an edge of an area formed by the boundary line or the obstacle or a point of a protruding area of as a feature point.

The controller 110 may set a plurality of transit candidates at a predetermined distance and angle based on the feature point, designate at least one of the transit candidates as a transit point, and designate a movement path which connects the starting point, the transit point, and the target point to each other. The controller 110 sets a transit point based on a feature point, but the feature point may also be set as a transit point.

The controller 110 sets the movement path by designating the transit point when the moving robot cannot travel in a straight line to a target point based on the map.

When the target point is positioned outside the area, the controller 110 may set a point adjacent to the target point within the area as a transit point to perform the traveling. The transit point set at this time may become a new target point.

When a new obstacle is detected by the obstacle detector while traveling, the controller 110 may determine position and size of the obstacle and a shape (outline) of the obstacle, store obstacle information, and display the position on the map. When the size of the obstacle is larger than a predetermined size, the controller 110 may set the area where the obstacle is positioned as an unmovable area.

The controller 110 may change the movement path by setting a new transit point when a new obstacle is detected or the moving robot invades a boundary line, or approaches or collides with the obstacle while the moving robot travels according to the movement path.

In addition, even when a new obstacle occurs or the boundary line is invaded, the controller can travel to the target point by setting a new movement path after traveling for a predetermined time along the boundary line.

The controller avoids the obstacle detected through the obstacle detector to perform the traveling, but in some cases, the moving robot may invade the boundary line and may move to the position of the obstacle due to a position error. The controller 110 may generate the position error for reasons such as slipping, a movement due to a ground state, a movement due to a collision, or the like during the traveling.

When the position error occurs, the controller 110 travels along the boundary line and may correct the position error. In addition, the controller can correct the position error by using a coordinate value of the feature point.

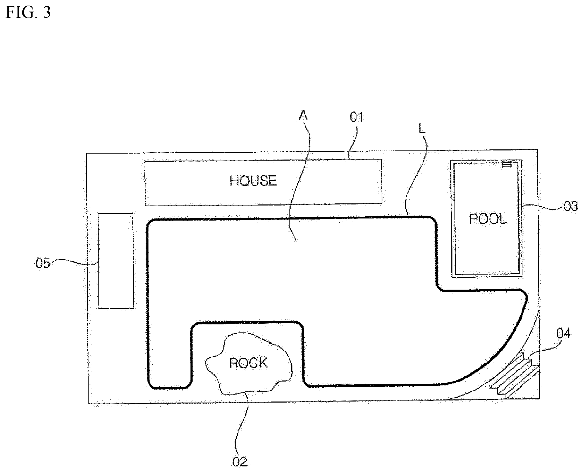

FIG. 3 is an exemplary diagram explaining the traveling area and the boundary line of the moving robot according to the embodiment of the present disclosure.

As illustrated in FIG. 3, the moving robot 100 travels an area inside a boundary line L based on the boundary line L. In addition, the moving robot 100 may travel a plurality of areas formed by a plurality of boundary lines.

The boundary line L may be buried with a wire in the ground of the area where the moving robot 100 travels, and may be formed by a marker installed or attached to the ground or a wall. Further, the boundary line L may be formed by a signal transmitted from a plurality of information transmitters (not illustrated) which are installed on any one side of the area.

The moving robot can detect the wire directly, and can detect the boundary line L by a magnetic field or an induced electromotive force generated from the wire.

The moving robot may detect the boundary line by receiving a signal transmitted from a position information transmitter, and may detect the boundary line by detecting a marker through an image. In addition, the moving robot may control the traveling by determining a virtual boundary set on a map by a terminal connected to each other as the boundary line.

It should be noted that the method of setting the boundary line can be used in a variety of ways other than the wire, the marker, or the signal transmitting described above.

The moving robot 100 mows the lawn while moving an inner area A formed by the boundary line L. The inner area A formed by the boundary line is the travelable area.

Meanwhile, the boundary line may be installed to avoid a plurality of surrounding obstacles, a house O1, a garden O5, a rock 02, a staircase 03, a swimming pool 04, or a pond.

In addition, when there is an obstacle having a predetermined size or more in the boundary line, a position of the obstacle is classified as a non-travelable area. For example, the boundary line can be installed excluding the rock 02, and in some cases, even when the rock O2 is positioned inside the boundary line, that is, within the travelable area, an obstacle having a predetermined size or more is classified as non-travelable area and the boundary line may be corrected.

The moving robot travels without deviating from the travelable area based on the boundary line, and thus, the moving robot can be prevented from approaching an area other than the lawn or an area in which there is an obstacle.

When the area A to be traveled is set, the moving robot 100 moves into the designated area so as to not deviate from the boundary line L. The moving robot 100 moves the inner region of the region A with the boundary line L at the outer edge. In some cases, the moving robot 100 may move while maintaining the boundary line to be located at the center of the moving robot due to a difference in a method of detecting the boundary line. It can be determined that the moving robot has not deviated from the boundary line.

The moving robot 100 travels along the boundary line L, generates the map based on the obtained position information and obstacle information, calculates the coordinates of the map, and calculates the position by matching the coordinates and the area A with each other.

The moving robot 100 may divide the area into the travelable area and the non-travelable area while traveling a set area, and correct a preset area based on information on an obstacle detected during the traveling.

The moving robot 100 stores a position of the charging station. Since the moving robot 100 obtains power for movement through charging, it is necessary to stop the operation set according to a state of the battery during the traveling and return to the charging station to perform charging. Accordingly, the position of the charging station is set, and if the charging is necessary, the main body returns to the charging station.

The moving robot 100 may set an initial starting position as a charging station, and may detect the charging station while traveling along the boundary line. When the position of the charging station is detected, the moving robot 100 stores the position of the charging station on the map.

In some cases, when the charging station 12 is positioned in an area other than the area A beyond the boundary A, the controller 110 controls the traveler so that the traveler ignores the boundary line and returns to the charging station outside the boundary when the charging is required.

For example, the moving robot sets a charging station return mode, temporarily cancels the setting of the area according to the boundary line L in the charging station return mode, and searches for the charging station based on the detected obstacle information so as to be returned.

In addition, when the charging station is positioned outside the area A, the moving robot 100 may include a predetermined area connecting the charging station from a point adjacent to the charging station as the travelable area.

The moving robot 100 may set a reference position in the area A, calculate coordinates for each point in the area based on the reference position, and store position information of each point.

The moving robot 100 may calculate a movement distance based on a rotating speed of the wheel, a moving speed, or a rotation direction (sensor value of a gyro sensor), and accordingly, calculate a current position within a region.

Even when the moving robot 100 determines the position using GPS, the moving robot 100 may determine the position by using any one point as a reference position. The moving robot 100 may acquire position information using a GPS signal, an ultrasonic signal, an infrared signal, an electromagnetic signal, or an Ultra Wide Band (UWB) signal.

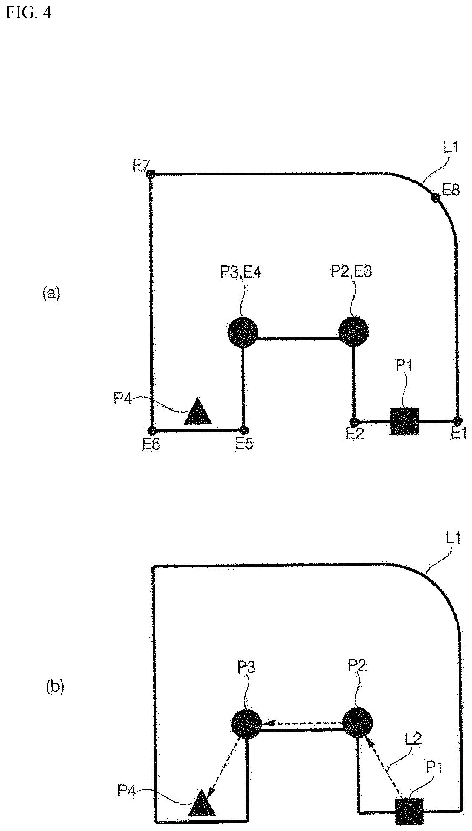

FIG. 4 is a diagram explaining a movement path using a transit point of the moving robot according to the embodiment of the present disclosure.

As illustrated in (a) of FIG. 4, the moving robot 100 may move within an area formed by a boundary line L1.

The moving robot 100 may move from a starting point P1 to a target point P4.

The moving robot 100 may extract respective points E1 to E7 of a plurality of breakpoints formed by the boundary line from the shape of the boundary line L1 and set the points as the feature points. In addition, the moving robot can set a point E8 of a curve formed at a boundary between a line and a line or a surface and a surface as the feature point as a gently bending point in some cases, and may set a point in the protruding area to the feature point.

The moving robot designates a position so as not to invade the boundary line for some areas which move a point where linear traveling is not possible, and the point can be set as a feature point for the shape of the area where linear movement is impossible.

However, when the moving robot travels any one end of the area among the plurality of feature points, for example, first, second, fifth, sixth, seventh, eighth points (E1, E2, E5 to E8), the moving robot linearly travels the area except when the moving robot moves along the boundary line, and thus, the feature points are unlikely to be the transit points and are excluded.

As illustrated in (b) of FIG. 4, when the moving robot 100 cannot move along the linear path from the starting point P1 to the target point P4, a movement path including at least one transit point of the feature points may be set.

In order to move the moving robot from the starting point P1 to the target point P4, a third feature point E3 and a fourth feature point E4 can be set as a first transit point P2 and a second transit point P3, respectively. The moving robot can set a movement path L2 which linearly connects the starting point P1 and the third feature point E3 and the fourth point E4, that is, the first transit point P2 and the second transit point P3, and the target point P4 to each other. When the moving robot travels according to the movement path L2, the moving robot may travel along the boundary line between the third feature point E3 and the fourth feature point E4.

The moving robot may set the movement path as described above when moving from the charging station to a point where lawn mowing starts, when returning to the charging station at a specific point in the area, or when moving within the area.

The moving robot can set the movement path with the shortest distance in case of moving between points.

Meanwhile, in the case of the lawn mowing, the moving robot passes through all the designated areas and travels while mowing the grass on the ground. Accordingly, the moving robot repeats that the moving robot linearly travels the area from the starting point, and thereafter, changes a direction, and linearly travels again. For example, a moving robot may travel in zigzag or spiral in the area.

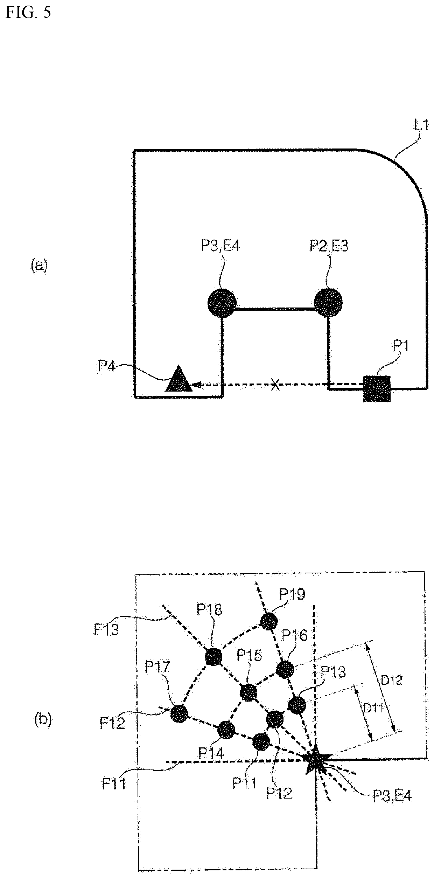

FIG. 5 is a diagram illustrating a transit candidate for designating the transit point of FIG. 4.

As illustrated in (a) of FIG. 5, the moving robot 100 moves from the starting point P1 to the target point P4.

First, the controller 110 determines whether the moving robot is possible to travel in a linear path from the starting point P1 to the target point P4, and if it is determined that the moving robot cannot travel in the linear path, the controller sets a movement path including the transit point.

The controller 110 may set a movement path including the feature points, that is, the third and fourth feature points E3 and E4, which are located in an area which should pass to move to the target point P4, among the plurality of extracted feature points, as the first and second transits P2 and P3.

As illustrated in (b) of FIG. 5, the moving robot may set a plurality of transit candidates based on the third and fourth feature points E3 and E4, and may set any one of the plurality of transit candidates as the transit point.

The third and fourth feature points E3 and E4 are set on the boundary line or in contact with the boundary line, and thus, the moving robot travels along the boundary line when passing through the third and fourth feature points E3 and E4. In addition, the moving robot may invade the boundary line during cornering at the third and fourth feature points E3 and E4 while traveling, and may deviate outside.

Accordingly, the moving robot may set any one of a plurality of transit candidates as the transit point to set a movement path which does not move along the boundary line.

The controller 110 may set a plurality of transit candidates at a plurality of points according to a distance in a predetermined angle unit based on the boundary line where the feature point is positioned. The controller 110 may set the transit candidate at a position of a predetermined angle within a range of 15° to 75°.

In addition, the controller can set a plurality of transit candidates at a plurality of points according to a distance from the feature point considering a size of the moving robot. The controller can set the transit candidate by changing the distance within a range of 0.5m to 3.5m.

For example, the controller 110 may set the first, second, and third transit candidates P11, P12, and P13 at a position away by an eleventh distance D11 based on the fourth feature point P3 or E4. In addition, the controller 110 may set the fourth, fifth, and sixth transit candidates P14, P15, and P16 at a position away by a twelfth distance D2 from the fourth feature point P3 or E4.

In addition, based on an extension line F11 extending the boundary line where the fourth feature point is positioned, the controller may set first, fourth, and seventh transit candidates P11, P14, and P17 according to a distance on a line F12 forming a first angle with respect to the extension line. In addition, the controller may set second, fifth, and eighth transit candidates P12, P15, and P18 on a line F13 forming a second angle with respect to the extension line F11, for example, 45°.

The controller 110 may arbitrarily set a transit point to be included in the movement path among the plurality of transit candidates. The controller can set the transit point in consideration of the size of the moving robot.

The controller 110 may set any one of a plurality of transit candidates as a transit point according to a position of the next transit point or target point. For example, the transit candidate may be set as the transit point based on a direction in which the target point is positioned according to the position of the target point P4 based on the traveling direction at the fourth feature point.

In addition, for a plurality of transit candidates, the controller 110 may set any one transit candidate as a transit point based on the number of accident occurrences or the number of successful traveling according to each transit candidate according to a previously stored traveling record.

For example, when a collision, boundary line invasion, slipping, or inability to traveling occurs while moving with the first transit candidate as the transit point for the fourth feature point, excluding the first transit candidate, a transit candidate among the remaining transit candidates can be set. In addition, the controller 110 may accumulate the number of accidents at the eleventh distance D11 and the twelfth distance D12 and the number of accidents at distances of the first angle and the second angle and may set a transit candidate with a high number of successful traveling excluding a transit candidate with a high number of accidents as the transit point. The controller 110 may determine a feature point as a transit candidate and set the transit candidate as a transit point.

The controller 110 sets any one of the plurality of transit candidates as the transit point, and when the transit point is set for each feature point, the controller controls the traveler by setting a movement path connecting the transit point. The controller may set the movement path for the starting point, the transit point, and the target point by using position information such as coordinates and the transit point.

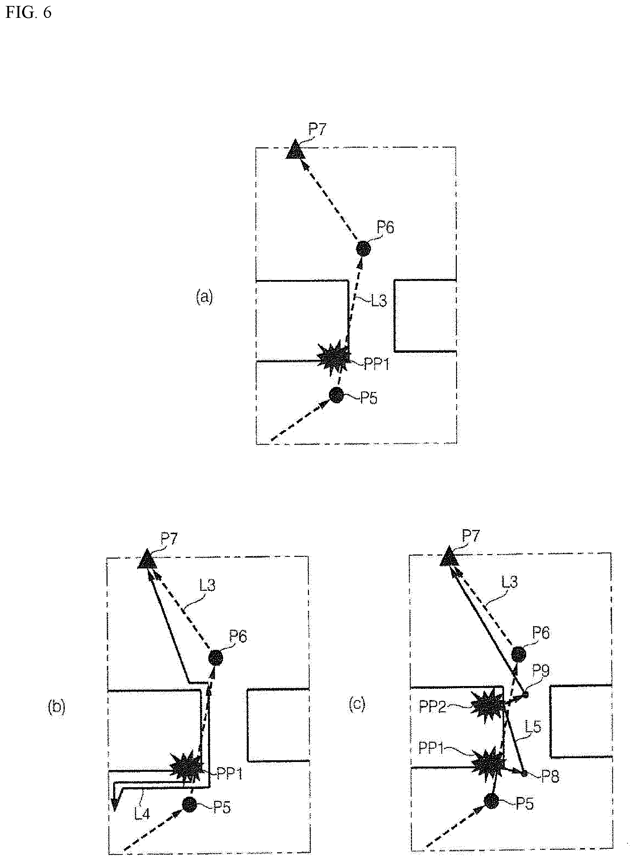

FIG. 6 is a diagram explaining the change of the movement path of the moving robot according to the embodiment of the present disclosure.

When a position error occurs due to slipping, collision, or the like during traveling, the moving robot 100 may correct the position error so that the moving robot travels to set the feature point with coordinates as the transit point or travels along the boundary line and change the movement path.

When the current position is unclear due to the position error, the controller 110 controls the moving robot so that the moving robot travel to change the traveling direction toward an adjacent feature point or boundary line, and when the boundary line is detected, the controller may correct the position error based on an actual movement distance.

When the moving robot reaches the boundary line due to the position error during traveling, the moving robot travels by a predetermined distance along the boundary line, and thus, the controller 110 may correct the position error.

Moreover, when the obstacle is repeatedly detected, the controller 110 may reconstruct the feature point.

As illustrated in (a) of FIG. 6, the moving robot 100 may travel while setting a third movement path L3 which includes a fifth transit point P5 and a sixth point P6 and along which the moving robot moves to the target point P7.

While the moving robot travels the movement path which connects the fifth transit point P5 and the sixth transit point P6 to each other, the moving robot may collide with a wall surface or may invade the boundary line at a first accident point PP1. Collisions or accidents invading the boundary line may occur in a narrow area in which the movable area decreases.

The controller 110 may set an escape mode for occurrence of an unexpected accident.

The controller 110 change the movement path according to any one of the escape mode (wire following mode) in which the moving robot travels along the boundary line and an escape mode (mirror mode) in which a new transit point is set and the moving robot travels along the new transit point so that the moving robot can escape from an accident occurrence situation.

Moreover, the controller 110 may apply two escape modes so that the moving robot can escape the accident occurrence situation.

Meanwhile, the position error may occur when the collision occurs, and thus, the controller can correct the position error through setting of the escape mode.

As illustrated in (b) of FIG. 6, the moving robot 100 may travel to change the path to a fourth movement path L4 along which the moving robot travels the boundary line at a predetermined distance in the escape mode (wire following mode) along which the moving robot travels the boundary line.

The moving robot 100 moves to the boundary line adjacent to the first accident point PP1 and travels by a predetermined distance along the boundary line, and when the position is checked, the moving robot 100 change the traveling direction to a direction in which the target point is positioned, travels along the boundary line, and thereafter, move to the target point.

If an accident occurs at the first accident point PP1, the controller 110 ignores the preset third movement path, and controls the traveler so that the moving robot moves along the boundary line in the first direction. The controller 110 correct the position based on the boundary line and determines the current position. When the direction is determined as a direction which is away from the target point P7 and approaches the starting point, the controller 110 may change the traveling direction and control the traveler so that the moving robot moves along the boundary line in a second direction which is a direction opposite to the first direction. When the first direction is a direction approaching the target point, the controller may control the moving robot so that the moving robot moves along the boundary line while maintaining the first direction.

When the moving robot reaches a position at which the moving robot can linearly travel the target point P7 while traveling along the boundary line, the controller 110 controls the moving robot so that the moving robot linearly travels the target point P7.

Accordingly, the moving robot passes through the accident point and travels along the boundary line, and linearly travels the target point P7 from the boundary line at the point at which the moving robot can linearly move to the target point P7.

As illustrated in (c) of FIG. 6, the moving robot 100 may travel along a fifth movement path L5 including a new transit point by the escape mode (mirror mode) in which a new transit point is set and the traveling is performed.

The controller 110 may change the movement path by setting an eighth transit point P8, which is a new transit point, with respect to the first accident point PP1 where the accident has occurred.

The controller 110 sets the eighth transit point P8 as a mirror transit point of the fifth transit point P5 so that the moving robot escapes from the accident. The eighth transit point P8 may be one of a plurality of other transit candidates set when the fifth transit point P5 is designated. In addition, the controller 110 may set an eighth transit point, which is a new transit point, based on the fifth transit point P5 or the first accident point P11.

The controller 110 may change the path to a new fifth movement path L5 connecting the eighth transit point and the sixth transit point to each other.

Meanwhile, an accident such as a collision or a boundary line invasion may occur at a second accident point PP2 due to a position error while the moving robot 100 travels along the fifth movement path L5.

The controller 110 may change the movement path by setting a new transit point and a ninth transit point P9 from the second accident point PP2.

Accordingly, the moving robot 100 may travel from the ninth transit point to the target point P7 to reach the target point.

The controller searches for and sets a new movement path by traveling along the boundary line or setting a new transit point for the accident and position error which occur during the traveling, and thus, the moving robot escapes from the accident situation and reaches the target point in a short time.

FIGS.. 7 and 8 are diagrams explain movement path setting according to the target point of the moving robot according to the embodiment of the present disclosure.

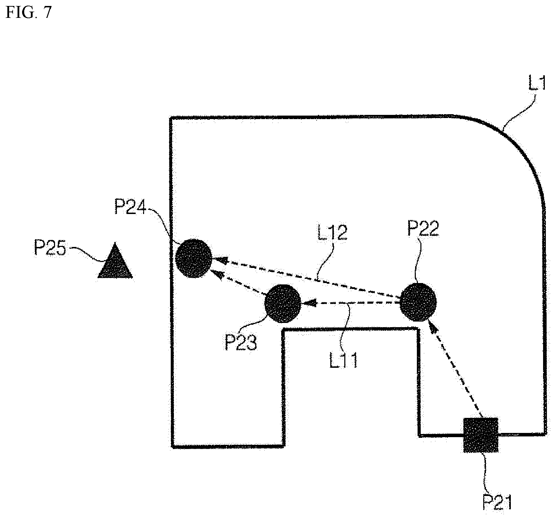

As illustrated in FIG. 7, when a point P15 other than the area outside the boundary line L1 is set as the target point, the moving robot 100 sets a point adjacent to the target point as a new target point P24.

When the moving robot is set to move from the starting point P21 to the target point P25, the controller 110 calculates the position of the target point P25 and determines that the target point is a point outside the area.

The controller 110 may set 24th transit point P24 on the boundary line adjacent to the target point P25 or in an inner region of the boundary line. The 24th transit point P24 may be set as a new target point.

Accordingly, the moving robot 100 may reach the 24th transit point P24, which is a new target point, through an 11th movement path L11 passing through 22nd and 23rd transit points P22 and P23 from the starting point P21. In some cases, the moving robot 100 may travel through 12th movement path L12 linearly moving from the 22nd transit point P22 to the 24th transit point P24, that is, the new target point.

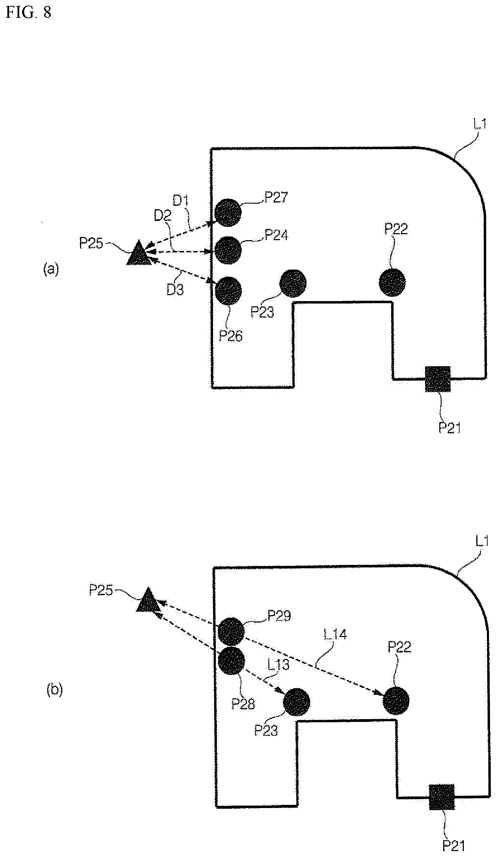

When the target point is located outside the area, as illustrated in (a) and (b) of FIG. 8, the controller 110 may set a plurality of transit candidates and set a new target point from the plurality of candidates.

As illustrated in (a) of FIG. 8, the controller 110 may set an adjacent point within a predetermined distance range from the target pointP25 as the transit candidate. For example, a 27th point (P27) at a first distance D1, a 24th point P24 at a second distance D2, and a 26th point P26 at a third distance D3 are set as transit candidates, and any one candidate may be set as a transit point and a new target point.

The controller 110 may set any one of a plurality of transit candidates according to a distance from a target point, a location of a surrounding obstacle, and a distance from a previous transit point. In addition, the controller 110 may set a transit point in consideration of the number of accidents at each point.

In addition, as illustrated in (b) of FIG. 8, when the target point P25 and the 23rd transit point P23 are connected to each other by a straight line L13, the controller 110 may set a 28th point adjacent to the boundary line among a plurality of points positioned on the straight line as a new target point.

In some cases, when the target point P25 and the 22nd transit point P22 are connected to each other by a straight line L14, the controller may set a 29th point P29 adjacent to the boundary line and the target point among a plurality of points positioned on the straight line as a new target point.

When a point outside the area is the target point, the controller 110 sets a new target point within the area to set a movement path, and controls the traveler so that the moving robot moves to the new target point.

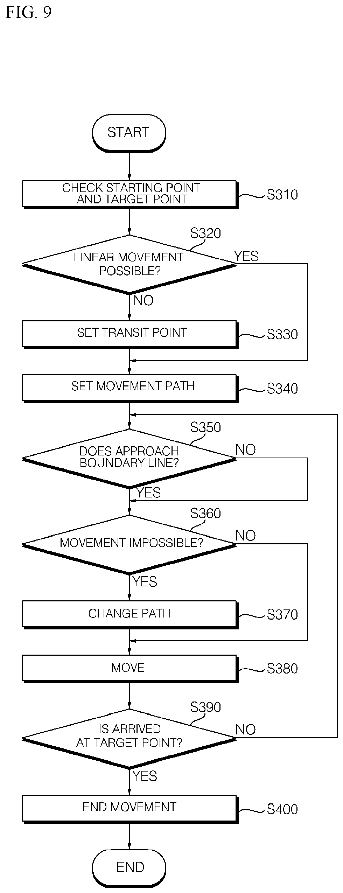

FIG. 9 is a flowchart of a control method of a moving robot which moves using the transit point according to an embodiment of the present disclosure.

As illustrated in FIG. 9, when the moving robot 100 is required to be moved, for example, when the moving robot 100 moves from a current position to the charging station, when the moving robot 100 moves to a specific position, or when the lawn mowing starts from the specific position, the controller may set the movement path while having a point to which the moving robot is to be moved as the target point.

The controller 110 sets the current position as a starting point, sets the point to be moved as the target point, and checks the position (S310). The controller 110 can check a movement position of the actual area through coordinates of the starting point and the target point using a previously stored map.

The controller 110 determines whether or not the linear movement from the starting point to the target point is possible based on the obstacle information and the shape of the area from the map (S320).

When the moving robot can move along the linear path, the controller 110 sets a traveling direction as the target point and controls the traveler to start moving.

Meanwhile, when the moving robot cannot move along the linear path, that is, when the moving robot cannot be driven according to the shape of an area or an obstacle is located, the controller 110 may set the movement path for movement to a target point.

The controller 110 may set a movement path so that the moving robot travels from the boundary line adjacent to the target point to the target point while moving along the boundary line from the starting point to the target point.

In addition, the controller 110 may set at least one transit point between the starting point and the target point (S330), and may set the movement path connecting the starting point, the transit point, and the target point to each other (S340).

The controller 110 sets the movement path so that the moving robot can set the transit point and linearly travel between the respective points, and thus, can shorten a traveling distance to the target point. Meanwhile, when the moving robot moves along the boundary line, the driving distance increases ger, and thus, it may take a lot of time for the moving robot to move to the target point.

Accordingly, the moving robot 100 starts the traveling according to the movement path connecting the starting point, the transit point, and the target point to each other.

When the moving robot 100 approaches the boundary line while traveling to the target point S350, when the moving robot approaches an obstacle or collides with an obstacle, the controller 110 determines whether or not the moving robot cannot move (S360).

When it is determined that the moving robot 100 cannot move according to the currently set movement path, the controller 110 changes the movement path (S370).

The controller 110 may determine that the movement is impossible even when the moving robot cannot move due to the obstacle or boundary line and when the current position cannot be checked due to the position error. The controller 110 may determine that there is an error in the current position due to a position change caused by a slip or a collision while the traveling.

The controller 110 corrects the position error based on the boundary line and sets a new movement path from the current position to the target point. The controller 110 may change the movement path by traveling along the boundary line or by setting a new transit point.

The controller 110 controls the traveler to travel according to the new movement path. Accordingly, the moving robot 100 moves to the target point based on the changed and new movement path (S380).

When the moving robot reaches the target point, the moving robot 100 ends the movement along the movement path (S400). The moving robot 100 waits for the next command to be input or starts a preset designated operation. For example, the moving robot 100 may start the lawn mowing while moving a set area according to a predetermined traveling pattern from the target point. When the target point is the charging station, the moving robot 100 may start the charging by docking at the charging station.

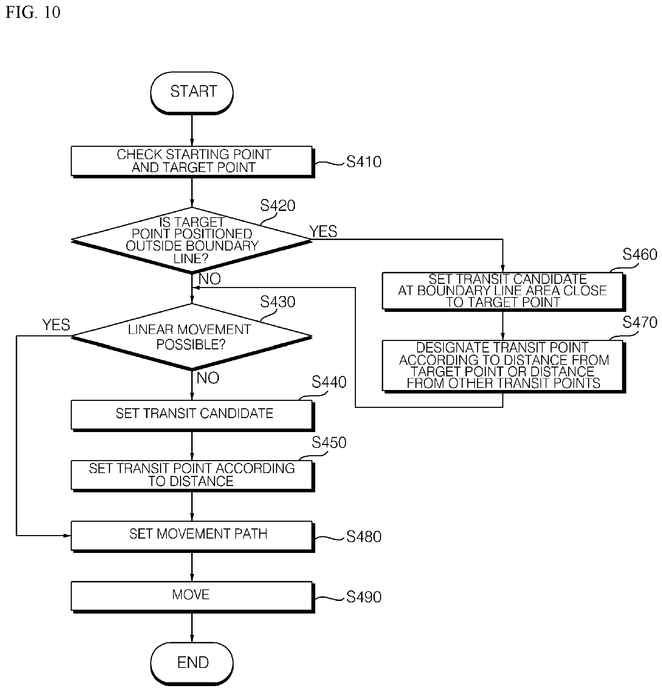

FIG. 10 is a flowchart illustrating a movement path setting method of the moving robot according to the embodiment of the present disclosure.

As illustrated in FIG. 10, the moving robot 100 checks the positions of the starting point and the target point (S410), and moves to the target point according to the set movement path.

When the movement path is set, the controller 110 determines whether or not the target point is positioned at a point outside the boundary line or outside the boundary line (S420).

When the target point is positioned in the area, the controller 110 determines whether or not the moving robot can linearly travel from the starting point to the target point (S430).

When the moving robot can linearly move, the controller sets the movement path linearly connecting the starting point and the target point to each other (S480) and controls the traveler. Meanwhile, when the target point is positioned outside the area, the controller 110 sets a plurality of transit candidates in the area of the boundary line based on the boundary line adjacent to the target point (S460).

The transit candidate can set a plurality of transit candidates positioned within a predetermined distance from the target point among the areas of the boundary line adjacent to the target point. In addition, among a plurality of points on the line linearly connecting the target point and the previous transit point to each other, a point adjacent to the boundary line can be set as the transit candidate. As illustrated in FIG. 8 described above, the 28th point on the line connecting the 23rd transit point and the target point to each other, and the 29th point on the line connecting the 24th transit point and the target point to each other may be set as the transit candidates.

The controller 110 may set any one point among the plurality of transit candidates as a transit point, based on information on a distance from the target point, a distance from other transit points, the frequency of accidents at each point, and surrounding obstacles (S470). In some cases, the controller 110 may set the transit point according to a set condition without setting a separate transit candidate.

Moreover, the controller 110 sets the movement path by setting the set transit point as a new target point.

The controller 110 determines whether the moving robot can linearly move between the starting point and the new target point (S430), and when the moving robot cannot linearly move, the controller sets at least one transit point between the starting point and the new target point (S450).

As illustrated in FIGS. 5 and 6 described above, the controller 110 sets at least one transit point to avoid the obstacle without invading the boundary line and deviating from the area according to the shape of the area and the position of the target point.

The controller 110 may set the plurality of transit candidates based on the feature point set at the breakpoint and the corner according to the shape of the area, and then may set one transit candidate as the transit point based on at least one of the position of the target point, the surrounding obstacle, the number of accidents of each transit candidate, and the number of successful traveling.

When at least one transit point is selected, the controller 110 sets the movement path connecting the starting point, the transit point, and the target point to each other (S480).

Accordingly, the moving robot moves to the target point (S490).

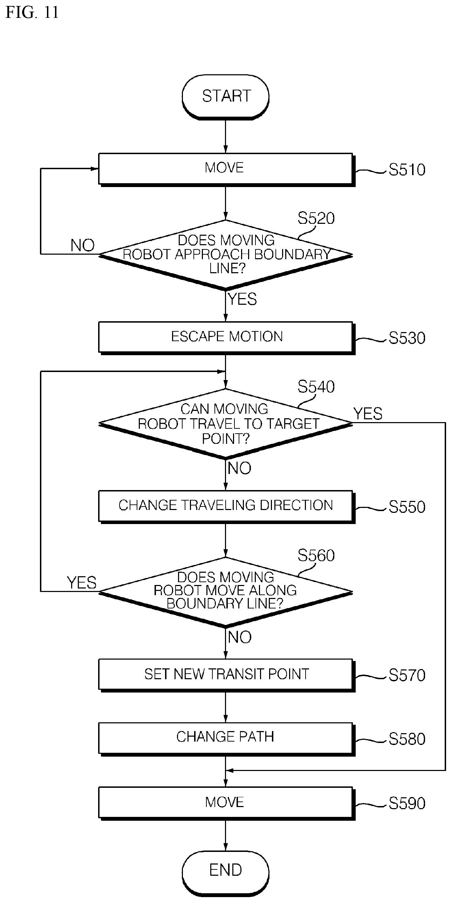

FIG. 11 is a flowchart illustrating a movement path change method of the moving robot according to the embodiment of the present disclosure.

As illustrated in FIG. 11, the moving robot 100 moves to a target point according to a set movement path.

When the controller 110 sets the movement path so that the moving robot moves to the target point, the controller 110 sets the movement path so as not to invade the boundary line or collide with the obstacle. However, since the moving robot travels in an outdoor area, slipping may occur depending on a condition of a floor or an error may occur in the position of the moving robot depending on a material of the floor.

In addition, the moving robot 100 detects and avoids the obstacle in a traveling direction while traveling. However, there may be a moving obstacle or the moving robot may collide with an obstacle in a blind spot which is not detected.

Accordingly, when the moving robot 100 approaches the boundary line and invades the boundary line, and thus, deviates the area or collides with an obstacle (S520) due to the position error generated caused by slipping while the moving robot 100 travels, the controller determines that an accident has occurred.

The controller can determine whether or not the boundary line reaches by a signal such as a current or magnetic field induced from the boundary line. The controller controls the traveler so that the moving robot does not deviate from the boundary line and out of the area.

When an accident occurs, the controller may set and perform an escape mode to escape from an accident situation while correcting the position error (S530). When the boundary line is detected, the controller 110 compares the determined position value and the position of the boundary line to correct the position error of the moving robot. When an accident occurs at a position spaced by a predetermined distance or more from the boundary line, the controller may correct the position based on the position of the obstacle stored on the map.

The controller 110 determines whether the moving robot can travel to the target point (S540), and when the moving robot can travel to the target point, the moving robot moves to the target point (S590).

Meanwhile, when the moving robot cannot travel to the target point, the controller 110 determines whether or not the moving robot travel along the boundary line.

When the moving robot travels along the boundary line, the controller 110 controls the traveler to move in one direction or a first direction based on the boundary line.

When the controller selects the movement path along which the moving robot travels along the boundary line, the controller 110 may determine the current position again while traveling, determine whether or not the moving robot approaches the target point, and then, change the traveling direction to a second direction. The second direction may be a direction opposite to the first direction.

When the moving robot reaches a position adjacent to the target point or a position capable of moving in a linear path to the target point while moving along the boundary line in the first direction or the second direction, the controller 110 deviates the boundary line and moves to the target point (S590).

Meanwhile, when the moving robot does not move along the boundary line, the controller 110 sets a new transit point based on the corrected current position (S570), and changes the movement path to a path connecting the new transit points to each other (S580).

The new transit point can be set in consideration of the distance between the current location and the target point, and a shape of an obstacle therebetween. In addition, the controller can set one of other transit candidates for the initial transit point based on the position of the accident as the new transit point. The controller 110 may set another transit candidate among a plurality of transit candidates set from the feature point as the new transit point.

In addition, when an accident occurs again while the moving robot travels the new movement path, the controller 110 may change the movement path by setting a new transit point.

Accordingly, the moving robot moves to the target point along the changed movement path (S590).

Accordingly, the embodiments disclosed in the present disclosure are not intended to limit the technical idea of the present disclosure, but to describe, and the scope of the technical idea of the present disclosure is not limited by these embodiments. The scope of protection of the present disclosure should be construed by the claims below, and all technical ideas within the scope of the same should be construed as being included in the scope of the present disclosure.

## Claims

1. A moving robot (100) comprising:
a main body (10) for traveling an area formed by a boundary line;
a traveler (170) for moving the main body (10);
an obstacle detector (120) for detecting an obstacle; and
a controller (110) configured to control the traveler (170) so that the main body (10) avoids the detected obstacle and is prevented from invading the boundary line and deviating outside the area, set at least transit point between a target point and a starting point to avoid the boundary line or the obstacle when the main body (10) moves, and set a movement path which linearly connects the starting point, the transit point, and the target point to each other;
wherein the controller (110) is configured to extract a feature point based on the shape of the area, and the position and shape of the obstacle, and set the at least one transit point based on the feature point;
wherein the controller (110) is configured to set a plurality of transit candidates based on the feature point, and set any one of the plurality of transit candidates including the feature point to the transit point;
**characterized in that**:
the controller (110) is configured to set a plurality of points spaced by a predetermined distance from the feature point to the plurality of transit candidates.

2. The moving robot (100) of claim 1, wherein the controller (110) is configured to determine a position in the area based on a map which is generated while moving along the boundary line and includes information on the boundary line and the obstacle.

3. The moving robot (100) of claim 1, wherein the controller (110) is configured to set a shape of the area and at least one transit point corresponding to the obstacle positioned between the starting point and the target point when the moving robot (100) cannot move along a straight path from the starting point to the target point.

4. The moving robot (100) of claim 1, wherein the controller (110) is configured to extract the feature point from the shape of the area, an area formed by the obstacle, and an edge or a corner of the area formed by the obstacle or the boundary line.

5. The moving robot (100) of claim 1, wherein the controller (110) is configured to set a plurality of points positioned on a line forming a predetermined angle based on the boundary line, where the feature point is positioned, to the plurality of transit candidates.

6. The moving robot (100) of claim 1, wherein the controller (110) is configured to set a plurality of points positioned on a plurality of lines formed in units of a predetermined angle based on the boundary line, where the feature point is positioned, to the plurality of transit candidates.

7. The moving robot (100) of claim 1, wherein when the target point is a point other than the area, the controller (110) is configured to set a point on the boundary line adjacent to the target point to a new target point.

8. The moving robot (100) of claim 7, wherein the controller (110) is configured to set a plurality of points on the boundary line according to a distance from the target point and set any one of the plurality of points to the new target point.

9. The moving robot (100) of claim 7, wherein the controller (110) is configured to set a point being in contact with the boundary line of a plurality of points positioned on a liner path which connects the target point and other transit points to each other to the new target point.

10. The moving robot (100) of claim 7, wherein the controller (110) is configured to set any one point corresponding to a distance from the target point, a position of the boundary line, information on a peripheral obstacle, and distances from other transit points to the new target point.

11. The moving robot (100) of claim 1, wherein when a position error is generated by at least one of sliding during traveling, idling of a wheel, and a movement caused by a collision, the controller (110) is configured to move to a feature point set in the boundary line or the area to correct a position.

12. The moving robot (100) of claim 1, wherein when the moving robot (100) invades the boundary line or collides with the obstacle due to a position error during traveling, the controller (110) is configured to correct the position error to get out of an accident situation.

13. The moving robot (100) of claim 12, wherein when an accident occurs, the controller (110) is configured to change the movement path so as to perform an escape mode so that the moving robot (100) moves an adjacent boundary line and moves to the target point while traveling the boundary line.

14. The moving robot (100) of claim 13, wherein the controller (110) is configured to set a new transit point based on an accident occurrence point and change the movement path to include the new transit point to perform an escape mode, and the controller (110) is configured to accumulate and store the number of accidents with respect to an accident occurrent point.

## Patentansprüche

1. Beweglicher Roboter (100), der Folgendes umfasst:
einen Hauptkörper (10) zum Befahren eines Bereichs, der durch eine Grenzlinie gebildet ist;
einen Läufer (170) zum Bewegen des Hauptkörpers (10);
einen Hindernisdetektor (120) zum Detektieren eines Hindernisses; und
eine Steuereinrichtung (110), die konfiguriert ist, den Läufer (170) derart zu steuern, dass der Hauptkörper (10) das detektierte Hindernis vermeidet und daran gehindert wird, in die Grenzlinie einzudringen und aus dem Bereich herauszukommen, mindestens einen Durchgangspunkt zwischen einem Zielpunkt und einem Startpunkt festzulegen, um die Grenzlinie oder das Hindernis zu vermeiden, wenn sich der Hauptkörper (10) bewegt, und einen Bewegungspfad festzulegen, der den Startpunkt, den Durchgangspunkt und den Zielpunkt linear miteinander verbindet;
wobei die Steuereinrichtung (110) konfiguriert ist, basierend auf der Form des Bereichs und der Position und Form des Hindernisses einen Merkmalspunkt zu extrahieren und den mindestens einen Durchgangspunkt basierend auf dem Merkmalspunkt festzulegen;
wobei die Steuereinrichtung (110) konfiguriert ist, basierend auf dem Merkmalspunkt mehrere Durchgangskandidaten festzulegen, und irgendeinen der mehreren Durchgangskandidaten, die den Merkmalspunkt enthalten, als den Durchgangspunkt festzulegen;
**dadurch gekennzeichnet, dass**:
die Steuereinrichtung (110) konfiguriert ist, mehrere Punkte, die durch eine vorgegebene Entfernung von dem Merkmalspunkt beabstandet sind, als die mehreren Durchgangskandidaten festzulegen.

2. Beweglicher Roboter (100) nach Anspruch 1, wobei die Steuereinrichtung (110) konfiguriert ist, basierend auf einer Karte, die während des Bewegens entlang der Grenzlinie erzeugt wird und Informationen über die Grenzlinie und das Hindernis enthält, eine Position in dem Bereich zu bestimmen.

3. Beweglicher Roboter (100) nach Anspruch 1, wobei die Steuereinrichtung (110) konfiguriert ist, eine Form des Bereichs und mindestens einen Durchgangspunkt entsprechend dem Hindernis, das zwischen dem Startpunkt und dem Zielpunkt positioniert ist, festzulegen, wenn sich der bewegliche Roboter (100) nicht entlang eines geraden Pfades von dem Startpunkt und dem Zielpunkt bewegen kann.

4. Beweglicher Roboter (100) nach Anspruch 1, wobei die Steuereinrichtung (110) konfiguriert ist, den Merkmalspunkt aus der Form des Bereichs, einem Bereich, der durch das Hindernis gebildet wird, und einer Kante oder Ecke des Bereichs, der durch das Hindernis oder die Grenzlinie gebildet wird, zu extrahieren.

5. Beweglicher Roboter (100) nach Anspruch 1, wobei die Steuereinrichtung (110) konfiguriert ist, basierend auf der Grenzlinie mehrere Punkte, die auf einer Linie, die einen vorgegebenen Winkel bildet, positioniert sind, auf der der Merkmalspunkt positioniert ist, als die mehreren Durchgangskandidaten festzulegen.

6. Beweglicher Roboter (100) nach Anspruch 1, wobei die Steuereinrichtung (110) konfiguriert ist, basierend auf der Grenzlinie mehrere Punkte, die auf mehreren Linien, die in Einheiten eines vorgegebenen Winkels gebildet sind, positioniert sind, auf denen der Merkmalspunkt positioniert ist, als die mehreren Durchgangskandidaten festzulegen.

7. Beweglicher Roboter (100) nach Anspruch 1, wobei dann, wenn der Zielpunkt ein anderer Punkt als der Bereich ist, die Steuereinrichtung (110) konfiguriert ist, einen Punkt auf der Grenzlinie neben dem Zielpunkt als einen neuen Zielpunkt festzulegen.

8. Beweglicher Roboter (100) nach Anspruch 7, wobei die Steuereinrichtung (110) konfiguriert ist, mehrere Punkte auf der Grenzlinie entsprechend einer Entfernung von dem Zielpunkt festzulegen und irgendeinen der mehreren Punkte als den neuen Zielpunkt festzulegen.

9. Beweglicher Roboter (100) nach Anspruch 7, wobei die Steuereinrichtung (110) konfiguriert ist, einen Punkt, der sich im Kontakt mit der Grenzlinie befindet, aus mehreren Punkten, die auf einem linearen Pfad positioniert sind, der den Zielpunkt und andere Durchgangspunkte miteinander verbindet, als den neuen Zielpunkt festzulegen.

10. Beweglicher Roboter (100) nach Anspruch 7, wobei die Steuereinrichtung (110) konfiguriert ist, irgendeinen Punkt entsprechend einer Entfernung von dem Zielpunkt, einer Position der Grenzlinie, Informationen über ein am Rand liegendes Hindernis, und Entfernungen von anderen Durchgangspunkten als den neuen Zielpunkt festzulegen.

11. Beweglicher Roboter (100) nach Anspruch 1, wobei dann, wenn durch Gleiten während des Fahrens, Leerlauf eines Rades und/oder einer Bewegung, die durch eine Kollision verursacht wird, ein Positionsfehler erzeugt wird, die Steuereinrichtung (110) konfiguriert ist, einen Merkmalspunkt, der auf der Grenzlinie oder in dem Bereich festgelegt ist, zu bewegen, um eine Position zu korrigieren.

12. Beweglicher Roboter (100) nach Anspruch 1, wobei dann, wenn der bewegliche Roboter (100) aufgrund eines Positionsfehlers während des Fahrens in die Grenzlinie eindringt oder mit dem Hindernis kollidiert, die Steuereinrichtung (110) konfiguriert ist, den Positionsfehler zu korrigieren, um aus einer Unfallsituation herauszukommen.

13. Beweglicher Roboter (100) nach Anspruch 12, wobei dann, wenn ein Unfall geschieht, die Steuereinrichtung (110) konfiguriert ist, den Bewegungspfad zu ändern, um einen Fluchtmodus durchzuführen, so dass der bewegliche Roboter (100) sich auf einer benachbarten Grenzlinie bewegt und sich zu dem Zielpunkt bewegt, während er auf der Grenzlinie fährt.

14. Beweglicher Roboter (100) nach Anspruch 13, wobei die Steuereinrichtung (110) konfiguriert ist, basierend auf dem Punkt des Unfallgeschehens einen neuen Durchgangspunkt festzulegen und den Bewegungspfad derart zu verändern, dass er den neuen Durchgangspunkt enthält, um einen Fluchtmodus durchzuführen, und die Steuereinrichtung (110) konfiguriert ist, die Zahl der Unfälle bezüglich eines Punkts des Unfallgeschehens zu speichern.

## Revendications

1. Robot mobile (100) comportant :
un corps principal (10) pour parcourir une zone formée par une ligne de frontière ;
un dispositif de déplacement (170) pour déplacer le corps principal (10) ;
un détecteur d'obstacle (120) pour détecter un obstacle ; et
une commande (110) configurée pour commander le dispositif de déplacement (170) de sorte que le corps principal (10) évite l'obstacle détecté et est empêché d'empiéter sur la ligne de frontière et de dévier à l'extérieur de la zone, définir au moins un point de transit entre un point de destination et un point de départ pour éviter la ligne de frontière ou l'obstacle lorsque le corps principal (10) se déplace, et définir un trajet de déplacement qui relie linéairement le point de départ, le point de transit et le point de destination les uns aux autres ;
dans lequel la commande (110) est configurée pour extraire un point de caractéristique basé sur la forme de la zone, et la position et la forme de l'obstacle, et définir le au moins un point de transit sur la base du point de caractéristique ;
dans lequel la commande (110) est configurée pour définir une pluralité de candidats au transit sur la base du point de caractéristique, et définir un candidat quelconque parmi la pluralité de candidats au transit incluant le point de caractéristique jusqu'au point de transit ;
**caractérisé en ce que** :
la commande (110) est configurée pour définir une pluralité de points espacés d'une distance prédéterminée du point de caractéristique jusqu'à la pluralité de candidats au transit.

2. Robot mobile (100) selon la revendication 1, dans lequel la commande (110) est configurée pour déterminer une position dans la zone sur la base d'une carte qui est générée tout en se déplaçant le long de la ligne de frontière et inclut des informations sur la ligne de frontière et l'obstacle.

3. Robot mobile (100) selon la revendication 1, dans lequel la commande (110) est configurée pour définir une forme de la zone et au moins un point de transit correspondant à l'obstacle positionné entre le point de départ et le point de destination lorsque le robot mobile (100) ne peut pas se déplacer le long d'un trajet rectiligne allant du point de départ jusqu'au point de destination.

4. Robot mobile (100) selon la revendication 1, dans lequel la commande (110) est configurée pour extraire le point de caractéristique à partir de la forme de la zone, d'une zone formée par l'obstacle et d'un bord ou un coin de la zone formée par l'obstacle ou la ligne de frontière.

5. Robot mobile (100) selon la revendication 1, dans lequel la commande (110) est configurée pour définir une pluralité de points positionnés sur une ligne formant un angle prédéterminé basé sur la ligne de frontière, où le point de caractéristique est positionné, jusqu'à la pluralité de candidats au transit.

6. Robot mobile (100) selon la revendication 1, dans lequel la commande (110) est configurée pour définir une pluralité de points positionnés sur une pluralité de lignes formées en unités d'un angle prédéterminé basé sur la ligne de frontière, où le point de caractéristique est positionné, jusqu'à la pluralité de candidats au transit.

7. Robot mobile (100) selon la revendication 1, dans lequel lorsque le point de destination est un point autre que la zone, la commande (110) est configurée pour définir un point sur la ligne de frontière adjacente au point de destination jusqu'à un nouveau point de destination.

8. Robot mobile (100) selon la revendication 7, dans lequel la commande (110) est configurée pour définir une pluralité de points sur la ligne de frontière en fonction d'une distance par rapport au point de destination et définir un point quelconque parmi la pluralité de points jusqu'au nouveau point de destination.

9. Robot mobile (100) selon la revendication 7, dans lequel la commande (110) est configurée pour définir un point étant en contact avec la ligne de frontière d'une pluralité de points positionnés sur un trajet linéaire qui relie le point de destination et d'autres points de transit les uns aux autres jusqu'au nouveau point de destination.

10. Robot mobile (100) selon la revendication 7, dans lequel la commande (110) est configurée pour définir un point quelconque correspondant à une distance par rapport au point de destination, une position de la ligne de frontière, des informations sur un obstacle périphérique, et des distances entre d'autres points de transit et le nouveau point de destination.

11. Robot mobile (100) selon la revendication 1, dans lequel lorsqu'une erreur de position est générée par au moins un élément parmi un glissement pendant le déplacement, une roue folle et un mouvement causé par une collision, la commande (110) est configurée pour se déplacer jusqu'à un point de caractéristique défini sur la ligne de frontière ou dans la zone pour corriger une position.

12. Robot mobile (100) selon la revendication 1, dans lequel lorsque le robot mobile (100) empiète sur la ligne de frontière ou entre en collision avec l'obstacle en raison d'une erreur de position pendant le déplacement, la commande (110) est configurée pour corriger l'erreur de position pour sortir d'une situation d'accident.

13. Robot mobile (100) selon la revendication 12, dans lequel lorsqu'un accident survient, la commande (110) est configurée pour changer le trajet de déplacement de manière à exécuter un mode d'échappement de sorte que le robot mobile (100) parcourt une ligne de frontière adjacente et se déplace jusqu'au point de destination tout en parcourant la ligne de frontière.

14. Robot mobile (100) selon la revendication 13, dans lequel la commande (110) est configurée pour définir un nouveau point de transit sur la base d'un point d'occurrence d'accident et changer le trajet de déplacement pour inclure le nouveau point de transit pour exécuter un mode d'échappement, et la commande (110) est configurée pour accumuler et stocker le nombre d'accidents par rapport à un point d'occurrence d'accident.
